(19) Europäisches Patentamt
European Patent Office
Office européen des brevets

(11) EP 1 331 494 A1

(12) **EUROPEAN PATENT APPLICATION**
published in accordance with Art. 158(3) EPC

(43) Date of publication:
**30.07.2003 Bulletin 2003/31**

(21) Application number: **00966473.1**

(22) Date of filing: **13.10.2000**

(51) Int Cl.[7]: **G02B 1/04**, C08L 57/00, C08K 5/3472, C08F 290/04, C08F 18/16

(86) International application number:
**PCT/JP00/07122**

(87) International publication number:
**WO 02/033447 (25.04.2002 Gazette 2002/17)**

(84) Designated Contracting States:
**AT BE CH CY DE DK ES FI FR GB GR IE IT LI LU MC NL PT SE**

(71) Applicant: **NOF CORPORATION**
**Tokyo 150-0013 (JP)**

(72) Inventors:
- **TANAKA, Katsuyoshi**
**Oita-shi, Oita 870-0744 (JP)**
- **FUJITA, Takanori**
**Oita-shi, Oita 870-0879 (JP)**
- **TAKAOKA, Toshiaki**
**Oita-shi, Oita 870-0844 (JP)**
- **KOINUMA, Yasumi**
**Oita-shi, Oita 870-0164 (JP)**

(74) Representative: **Hallybone, Huw George et al**
**Carpmaels and Ransford,**
**43 Bloomsbury Square**
**London WC1A 2RA (GB)**

# (54) COMPOSITION FOR OPTICAL MATERIAL, OPTICAL MATERIAL, AND PLASTIC LENS

(57) Optical material compositions are disclosed having excellent castability, and provide, by curing, optical materials having excellent colorlessness, transparency, and weatherability, high refractive index, and superior impact resistance, heat resistance, and dyeability. The optical material composition contains a polymerizable component containing a diallyl compound, a benzotriazole ultraviolet absorber, a blue pigment, and a nonionic surfactant. Also disclosed are optical materials having a refractive index of not lower than 1.53, and an Abbe's number of not smaller than 33, and plastic lenses.

EP 1 331 494 A1

## Description

The present invention relates to optical material compositions which have excellent castability and provide, by curing, optical materials excellent in optical properties such as colorlessness, transparency, refractive index, and Abbe's number, as well as in various other properties such as heat resistance and impact resistance. The present invention also relates to optical materials obtained by curing the optical material compositions, and plastic lenses.

In the art of optical materials including those for lenses, there has recently been a growing consciousness of light weight, safety, and fashionability, and conventional inorganic glass materials have being superseded by synthetic resin materials. Typical synthetic resin materials well-known in the art include poly(diethylene glycol bis(allyl carbonate)) (abbreviated as PADC hereinbelow), polymethylmethacrylate (abbreviated as PMMA hereinbelow), and polycarbonate (abbreviated as PC hereinbelow).

Lenses made of PADC or PMMA are superior to inorganic glass lenses in lower specific gravity, impact resistance, and dyeability, but have a lower refractive index of about 1.49, compared to that of ordinary inorganic glass lenses of 1.52. Thus, in order to increase the power, the lenses made of PADC or PMMA require increased edge thickness. On the other hand, lenses made of PC have a higher refractive index of about 1.58, but have a lower Abbe's number of 29. The PC lenses also have problems in optical anisotropy and coloring since these lenses are fusion molded.

In order to overcome these disadvantages, there have been proposed plastic lenses having higher refractive indices and superior optical properties. For example, JP-53-7787-A discloses a copolymer of diallyl isophthalate and diethylene glycol bis(allyl carbonate), JP-62-235901-A or JP-62-235901-A discloses a copolymer of diallyl phthalate and an unsaturated dibasic acid diester having aromatic rings in its ester groups for an improved refractive index, and JP-3-54213-A discloses a diallyl terephthalate oligomer resin.

These copolymers, however, have insufficient impact resistance, and the resulting cured resins have slight yellowing or prone to yellowing by sun.

Aside from the allyl monomers, JP-55-13747-Adiscloses a copolymer of a dimethacrylate of a bisphenol A derivative and styrene, and JP-62-267316-A discloses a thiourethane resin composed of polyisocyanate and polythiol. Both of these provide lenses having higher refractive indices, but the resulting cured products often have strains or haze occurred therein due to rapid polymerization, and thus have problems in initial coloring and UV resistance.

In order to lower the yellow value of a lens, JP-5-195446-A discloses a bluing method wherein blue and red pigments are added to aromatic diallyl ester before curing. However, the lens obtained by this method is not only low in impact resistance, but also incapable of containing coloring pigments at a high concentration, which leads to insufficient suppression of lens yellowing. In addition, the coloring pigmènts tend to separate from polymerizable components and be partly removed by an impurities filter during production, which hinders color adjustment of the lens.

It is an object of the present invention to provide an optical material composition which has excellent castability and provides, by curing, an optical material having excellent colorlessness, transparency, and weatherability, a high refractive index, and superior properties including impact resistance, heat resistance, and dyeability.

It is another object of the present invention to provide an optical material and a plastic lens which have excellent colorlessness, transparency, and weatherability, a high refractive index, and superior impact resistance, heat resistance, dyeability, and other properties.

According to the present invention, there is provided an optical material composition comprising a polymerizable component containing a diallyl compound, a benzotriazole ultraviolet absorber, a blue pigment, and a nonionic surfactant.

According to the present invention, there is also provided an optical material obtained by curing the above optical material composition.

According to the present invention, there is further provided a plastic lens comprising a lens shaped resin obtained by processing the above optical material.

The optical material composition according to the present invention contains a polymerizable component containing a diallyl compound, a benzotriazole ultraviolet absorber, a blue pigment, and a nonionic surfactant.

The diallyl compound contained in the polymerizable component may be, for example, a diallyl phthalate, a diallyl ester compound represented by formula (1), or a diallyl carbonate represented by formula (2).

$$CH_2=CHCH_2O\overset{\overset{O}{\|}}{C}-Ph-\overset{\overset{O}{\|}}{C}O-(R^1O\overset{\overset{O}{\|}}{C}-Ph-\overset{\overset{O}{\|}}{C}O)_x-CH_2CH=CH_2 \quad \ldots(1)$$

In formula (1) , $R^1$ stands for an alkylene group having 1 to 4 carbon atoms, such as an ethylene, trimethylene,

propylene, or tetramethylene group. If $R^1$ has more than 4 carbon atoms, the heat resistance of the resulting cured product may be disadvantageously lowered. It is thus preferred that the polymerizable component contains as little as possible diallyl ester compounds, if any, represented by formula (1) wherein $R^1$ has more than 4 carbon atoms. Ph stands for a phenylene group bound at the ortho, meta, or para position. x is an integer, preferably in the range of 1 to 20. If x is more than 20, the heat resistance of the resulting cured product becomes low, and the viscosity of the composition becomes extremely high, thus not being preferred.

$$CH_2=CHCH_2O\overset{\overset{O}{\|}}{C}O-((CH_2CH_2O)_y\overset{\overset{O}{\|}}{C}O)_z-CH_2CH=CH_2 \quad ...(2)$$

In formula (2), y denotes an integer of 2 to 5. If y is more than 6, the heat resistance of the resulting cured product becomes undesirably low. z denotes an integer of 1 to 4. If z is more than 4, the heat resistance of the resulting cured product becomes low, and the viscosity of the composition becomes extremely high, thus not being preferred.

The content of the diallyl compound may be selected suitably for each specific compound to be discussed later, but is usually 5 to 60 wt%, preferably 10 to 50 wt% of the composition.

The diallyl phthalate mentioned above may be, for example, diallyl isophthalate, diallyl terephthalate, diallyl ortho phthalate, or a mixture of two or more of these. Among these, diallyl isophthalate and/or diallyl terephthalate are preferred for the heat resistance and transparency of the resulting cured product.

When diallyl phthalate is used as the diallyl compound, the content thereof is usually 5 to 50 wt%, preferably 10 to 40 wt% of the composition. With the content of less than 5 wt%, the heat resistance of the resulting cured product is low, and the handleability of the composition is poor, thus being not preferred. With the content exceeding 60 wt%, the impact resistance of the resulting cured product is disadvantageously low.

The diallyl ester compound represented by formula (1) having allyl groups in its terminal ends, may be a single compound wherein x denotes a single integer, or a mixture of compounds having polyester oligomers with various x's. Under some production conditions, it may be difficult to prepare a single compound with a single value for x. Thus polyester oligomers over a range of molecular weights may preferably be used.

When the diallyl ester compound represented by formula (1) is used as the diallyl compound, the content thereof is usually 20 to 60 wt%, preferably 25 to 50 wt% of the composition. With the content of less than 20 wt%, sufficient effect cannot be given and the impact resistance of the resulting cured product becomes low. With the content exceeding 60 wt%, the viscosity of the composition becomes extremely high and the handleability of the composition becomes poor.

The diallyl ester compound represented by formula (1) may be prepared by ordinary transesterification, dehydration esterification, or the like process. For example, the compound may be prepared by reacting one or more diallyl phthalates selected from the group consisting of diallyl isophthalate, diallyl terephthalate, and diallyl ortho phthalate, and one or more alkylene diols selected from the group consisting of ethylene glycol, propylene glycol, 1,3-propanediol, and 1,4-butanediol, in the presence of a catalyst at 50 to 250 °C for 2 to 24 hours, and removing allyl alcohol under reduced pressure. The catalyst may preferably be, for example, metal acetates, metal carbonates, metal oxides, alkali metal hydroxides, alkali metal alkoxides, titanium alkoxide, or tin alkoxide.

The diallyl carbonate compound represented by formula (2) may preferably be used for improving impact resistance of the resulting cured product, or when a hard coating layer is to be provided over the plastic lens to be produced, for improving adhesivity of such a hard coating layer to the lens. The diallyl carbonate compound may either be a single compound with a single value for z, or a mixture of compounds with different values for z. However, it is preferred to use a mixture mainly composed of a compound with z=1 and also containing compounds with z=2 to 4.

When the diallyl carbonate compound represented by formula (2) is used as the diallyl compound, the content thereof is usually 10 to 50 wt%, preferably 20 to 40 wt% of the composition. With the content of less than 10 wt%, sufficient effect cannot be given, and the impact resistance of the resulting cured product becomes low. With the content exceeding 50 wt%, the refractive index of the resulting cured product becomes remarkably low.

The polymerizable component of the optical material composition according to the present invention may optionally contain, in addition to the diallyl compound, unsaturated carboxylate, for example for facilitating adjustment of the refractive index of the resulting cured product, or for further achromatizing the initial coloring of the cured product.

The unsaturated carboxylate may be those represented by formula (3):

$$R^2R^3C=CR^4-CO_2R^5 \quad (3)$$

In formula (3), $R^2$, $R^3$, and $R^4$ may be the same or different groups, and each stands for a hydrogen atom, a methyl group, $-CO_2R^6$, or $-CH_2CO_2R^6$. $R^5$ and $R^6$ may be the same or different groups, and each stands for an organic group having 1 to 12 carbon atoms or a hydrogen atom. If the carbon numbers of $R^5$ and $R^6$ exceed 12, the heat resistance of the resulting cured product is lowered, thus being not preferred.

Examples of the unsaturated carboxylate represented by formula (3) may include maleic diesters such as dimethyl maleate, diethyl maleate, diisopropyl maleate, di-n-butyl maleate, di-sec-butyl maleate, diisobutyl maleate, di-t-butyl maleate, di-n-hexyl maleate, di-2-ethylhexyl maleate, dicyclopentyl maleate, dicyclohexyl maleate, dimethoxyethyl maleate, diethoxyethyl maleate, diallyl maleate, allyl ethyl maleate, dibenzyl maleate, dichlorobenzyl maleate, dimethylbenzyl maleate, allyl benzyl maleate, and diphenyl maleate; maleic half esters such as monomethyl maleate, monoethyl maleate, monoisopropyl maleate, mono-n-butyl maleate, mono-sec-butyl maleate, monoisobutyl maleate, mono-t-butyl maleate, mono-2-ethylhexyl maleate, monocyclohexyl maleate, monomethoxyethyl maleate, monoethoxyethyl maleate, monoallyl maleate, monobenzyl maleate, monochlorobenzyl maleate, and monophenyl maleate; fumaric diesters such as dimethyl fumarate, diethyl fumarate, diisopropyl fumarate, di-n-butyl fumarate, di-sec-butyl fumarate, diisobutyl fumarate, di-t-butyl fumarate, di-n-hexyl fumarate, di-2-ethylhexyl fumarate, dicyclopentyl fumarate, dicyclohexyl fumarate, dimethoxyethyl fumarate, diethoxyethyl fumarate, diallyl fumarate, allyl ethyl fumarate, dibenzyl fumarate, dichlorobenzyl fumarate, dimethylbenzyl fumarate, allyl benzyl fumarate, and diphenyl fumarate; fumaric half esters such as monomethyl fumarate, monoethyl fumarate, monoisopropyl fumarate, mono-n-butyl fumarate, mono-sec-butyl fumarate, monoisobutyl fumarate, mono-t-butyl fumarate, mono-2-ethylhexyl fumarate, monocyclohexyl fumarate, monomethoxyethyl fumarate, monoethoxyethyl fumarate, monoallyl fumarate, monobenzyl fumarate, monochlorobenzyl fumarate, and monophenyl fumarate; itaconic diesters such as dimethyl itaconate, diethyl itaconate, diisopropyl itaconate, di-n-butyl itaconate, di-sec-butyl itaconate, diisobutyl itaconate, di-t-butyl itaconate, di-n-hexyl itaconate, di-2-ethylhexyl itaconate, dicyclopentyl itaconate, dicyclohexyl itaconate, dimethoxyethyl itaconate, diethoxyethyl itaconate, diallyl itaconate, allyl ethyl itaconate, dibenzyl itaconate, dichlorobenzyl itaconate, dimethylbenzyl itaconate, allyl benzyl itaconate, and diphenyl itaconate; itaconic half esters such as monomethyl itaconate, monoethyl itaconate, monoisopropyl itaconate, mono-n-butyl itaconate, mono-sec-butyl itaconate, monoisobutyl itaconate, mono-t-butyl itaconate, mono-2-ethylhexyl itaconate, monocyclohexyl itaconate, monomethoxyethyl itaconate, monoethoxyethyl itaconate, monoallyl itaconate, monobenzyl itaconate, monochlorobenzyl itaconate, and monophenyl itaconate; mesaconic diesters such as dimethyl mesaconate, diethyl mesaconate, diisopropyl mesaconate, di-n-butyl mesaconate, di-sec-butyl mesaconate, diisobutyl mesaconate, di-t-butyl mesaconate, di-n-hexyl mesaconate, di-2-ethylhexyl mesaconate, dicyclopentyl mesaconate, dicyclohexyl mesaconate, dimethoxyethyl mesaconate, diethoxyethyl mesaconate, diallylmesaconate, allyl ethyl mesaconate, dibenzyl mesaconate, dichlorobenzyl mesaconate, dimethylbenzyl mesaconate, allyl benzyl mesaconate, and diphenyl mesaconate; and methacrylates and acrylates such as methyl (meth)acrylate, ethyl(meth)acrylate, isopropyl (meth)acrylate, n-butyl(meth)acrylate, sec-butyl(meth)acrylate, isobutyl (meth)acrylate, t-butyl(meth)acrylate, n-hexyl(meth)acrylate, 2-ethylhexyl(meth)acrylate, cyclopentyl(meth)acrylate, cyclohexyl(meth)acrylate, methoxyethyl(meth)acrylate, ethoxyethyl(meth)acrylate, allyl (meth)acrylate, dibenzyl maleate, chlorobenzyl(meth)acrylate, methylbenzyl(meth)acrylate, and phenyl (meth) acrylate. Each of these maybe used alone, or two or more of these may be used as a mixture. Among these, maleic, fumaric, or itaconic diesters and half esters are particularly preferred.

The content of the unsaturated carboxylate represented by formula (3), when contained, is usually 1 to 20 wt%, preferably 2 to 10 wt% of the composition. With the content of less than 1 wt%, sufficient effect cannot be given, and with the content exceeding 20 wt%, the impact resistance of the resulting cured product becomes remarkably low, thus being not preferred.

The polymerizable component of the optical material composition according to the present invention may optionally contain, in addition to the diallyl compound and the unsaturated carboxylate, other vinyl monomers as desired.

Examples of such other vinyl monomers may include vinyl monomers such as vinyl acetate, vinyl benzoate, divinyl phthalate, and divinyl adipate; allyl monomers such as allyl acetate, ally benzoate, diallyl maleate, and triallyl trimellitate; ethylene glycol di(meth)acrylate, polyethylene glycol di(meth)acrylate, propylene glycol di(meth)acrylate, polypropylene glycol di(meth)acrylate, 2,2-bis(4-methacryloxyethoxyphenyl)propane, 2,2-bis(4-(2-methacryloxyethoxy)ethoxy)propane, 2,2-bis(4-(2-methacryloxyethoxy)diethoxy)propane, vinyl naphthalene, methyl(meth)acrylate, benzyl(meth)acrylate, phenyl(meth)acrylate, glycidyl (meth)acrylate, 2-hydroxyethyl (meth)acrylate, various urethane poly(meth)acrylates, glyceroyl (meth)acrylate, (meth)acrylic acid, (meth)acrylic amide, and N,N-dimethylacryl amide. Each of these may be used alone, or two or more of these may be used as a mixture.

The content of the other vinyl monomer, when contained, is preferably not more than 10 wt% of the composition.

The benzotriazole ultraviolet absorber in the optical material composition according to the present invention prevents photodegradation of the resulting cured product.

Examples of the benzotriazole ultraviolet absorber may include 2-(2'-hydroxy-5'-methylphenyl)-benzotriazole, 2-(2'-hydroxy-3',5'-di-t-butylphenyl)-5-chlorobenzotriazole, 2-(2'-hydroxy-3'-t-butyl-5'-methylphenyl)-5-chlorobenzotriazole, 2-(2'-hydroxy-3',5'-di-t-amylphenyl)-benzotriazole, 2-(2'-hydroxy-3',5'-di-t-butylphenyl)-benzotriazole, 2-(2'-hydroxy-5'-t-butylphenyl)-benzotriazole, and 2-(2'-hydroxy-5'-t-octylphenyl)-benzotriazole. Each of these may be used alone, or two or more of these may be used as a mixture.

The content of the benzotriazole ultraviolet absorber in the composition is usually 100 to 10000 ppm, preferably 1000 to 5000 ppm. With the content of less than 100 ppm, sufficient suppressive effect on photodegradation, such as yellowing, of the resulting cured product may not be given. With the content exceeding 10000 ppm, the ultraviolet absorber itself may cause lens yellowing, thus not being preferred.

The optical material composition according to the present invention may optionally contain, in addition to the benzotriazole ultraviolet absorber, other ultraviolet absorbers, as desired. Such other ultraviolet absorbers may be, for example, hydroxybenzophenone ultraviolet absorbers or salicylate compounds.

The blue pigment and the nonionic surfactant contained in the optical material composition according to the present invention, function to achromatize initial coloring and prevent yellowing due to photodegradation of the resulting cured product for improving colorlessness and transparency of the cured product.

The blue pigment is preferably those which are not degraded by a radical initiator used as a curing agent for the composition, and may be, for example, ultramarine composed of sulfur-containing sodium-aluminosilicate, Prussian blue composed mainly of ferric ferrocyanide, cobalt blue composed of cobalt oxide and alumina, or phthalocyanine blue composed of copper phthalocyanine. The particle size of the blue pigment is preferably about 0.05 to 100 $\mu$m. Among these examples, ultramarine is particularly preferred for its little tendency to discoloration by a radical initiator used as a curing agent or by treatment at an elevated temperature given to a resulting lens.

The ultramarine has cobalt and violet colors. The particle size is preferably 0.05 to 5 $\mu$m, more preferably 0.1 to 4 $\mu$m. For improved dispersibility in an oil system, the particle surface may preferably be treated with polysiloxane or silica.

The content of the blue pigment in the composition is usually 10 to 200 ppm, preferably 20 to 100 ppm. With the content of less than 10 ppm, sufficient colorlessness is not given to the resulting cured product, and with the content exceeding 200 ppm, the resulting cured product tends to be undesirably blued. It is more preferred that the content of the blue pigment is within the above-mentioned range, and also 0.2 to 10 wt% of the benzotriazole ultraviolet absorber.

The optical material composition of the present invention may optionally contain other pigments than the blue pigment in order to adjust the color hues, as long as the objects of the present invention are not impaired. Examples of such other pigments include titanium oxide, carbon black, quinacridone red, perylene red, dioxane violet, and phthalocyanine blue. The content of the other pigments may suitably be selected depending on the purpose.

The particular nonionic surfactant contained in the optical material composition according to the present invention has, in addition to the above-mentioned function, a function to prevent coagulation and sedimentation of the pigments including the blue pigment in the composition. The nonionic surfactant also prevents coloring upon curing the composition by a radical initiator used as a curing agent.

The present optical material composition may optionally contain other surfactants in addition to the nonionic surfactant. However, anionic surfactants may not be dissolved sufficiently in the present composition, and cationic surfactants may cause coloration of the resulting lens upon curing. It is thus preferred not to use these surfactants.

Examples of the nonionic surfactant may include an alkyl ether type such as polyoxyethylene lauryl ether, polyoxyethylene cetyl ether, polyoxyethylene stearyl ether, and polyoxyethylene oleyl ether; an alkyl phenol type such as polyoxyethylene nonyl phenyl ether and polyoxyethylene octyl phenyl ether; an alkyl ester type such as polyoxyethylene monolaurate, polyoxyethylene monostearate, and polyoxyethylene monooleate; a sorbitan ester type such as sorbitan monolaurate, sorbitan monostearate, and sorbitan monooleate; and a sorbitan ester ether type such as polyoxyethylene sorbitan monolaurate, polyoxyethylene monostearate, and polyoxyethylene monooleate. Each of these may be used alone, or two or more of these may be used as a mixture. In order to further improve solubility and dispersibility of the pigment, the HLB of the nonionic surfactant is preferably 8 to 17, more preferably 10.5 to 14.

The content of the nonionic surfactant in the composition is usually 1 to 200 ppm, preferably 5 to 100 ppm. With the content of less than 1 ppm, sufficient dispersion stability of the pigment cannot be given, and with the content exceeding 200 ppm, the composition may not be cured properly, thus being not preferred.

The optical material composition of the present invention may be prepared in any manner without particular limitation. Preferably, the nonionic surfactant is added to the polymerizable component together with the pigments including the blue pigment, or is added in advance to the polymerizable component to prepare a masterbatch using, for example, a stirrer, a disperser, a ball mill, or a roll mill, to which masterbatch the rest of the components including the blue pigment are added and mixed.

According to the present invention, the optical material composition contains the benzotriazole ultraviolet absorber, the blue pigment, and the nonionic surfactant in combination with the particular polymerizable component. Thus, yellowing due to photodegradation of the cured product obtained by curing the composition may be prevented, and even the slight coloring caused by addition of the benzotriazole ultraviolet absorber may be prevented to give a colorless, transparent product.

The optical material composition of the present invention may optionally contain ordinary amounts of other additives such as photochromic dyes, coloring agents, mold release agents, antioxidants, and antibacterial agents, for further improving other effects, as long as the objects of the present invention are not impaired.

The optical material according to the present invention is a cured product for optical purpose obtained by curing the above-mentioned optical material composition, and has a refractive index of not lower than 1.53, preferably 1.54 to 1.57, and an Abbe's number of not less than 33, preferably 34 to 35. The light beam transmittance of the optical material may preferably be not lower than 85 %, more preferably not lower than 89 %, and the yellow value (value of b*) may preferably be not more than 1.

The optical material composition may be cured, for example, by adding a radical initiator to the composition, and subjecting the resulting mixture to heat curing or active energy beam curing.

The radical initiator may be a peroxydicarbonate compound, such as diisopropyl peroxydicarbonate, di-n-propyl peroxydicarbonate, di-2-ethylhexyl peroxydicarbonate, di-3-methyl-3-methoxybutyl peroxydicarbonate, di-sec-butyl peroxydicarbonate, dimethoxyisopropyl peroxydicarbonate, di-2-ethoxyethyl peroxydicarbonate, and di-4-t-butylcyclohexyl peroxydicarbonate. Each of these may be used alone, or two or more of these may be used as a mixture.

The amount of the radical initiator is usually 0.01 to 10 parts by weight, preferably 0.1 to 5 parts by weight, based on 100 parts by weight of the composition. With the amount of less than 0.01 parts by weight, the composition may not be cured sufficiently, whereas with the amount exceeding 10 parts by weight, the cured optical material may contain strains, thus being not preferred.

The optical material of the present invention may be prepared by the following process, but may also be prepared by other processes as long as a product obtained by curing the present optical material composition may be used as an optical material.

The present optical material may be produced, for example, by adding a suitable amount of the radical initiator to the optical material composition of the present invention, optionally introducing the resulting mixture into a mold of a desired shape, such as a lens shape, made of metal, glass, or plastic, and heat curing. By such a process, the optical material is obtained in the form of a cross-linked resin lump, which is colorless, transparent, and insoluble in a solvent. When the mold is used, the cured resin lump may be demolded by a conventional method.

The heat curing may be performed usually at 30 to 100 °C for 5 to 72 hours, preferably for 10 to 36 hours. The temperature may gradually be raised within the range of 30 to 100 °C during heating.

When the mold is used for heat curing, the resulting resin lump, after demolded, is preferably annealed at 80 to 120 °C for 1 to 5 hours in an nitrogen atmosphere or in the air.

The plastic lens according to the present invention includes a lens shaped resin obtained by processing the resin lump as the optical material into a lens shape. The processing may include cutting.

The plastic lens of the present invention may have a hard coating layer formed over the surface of the lens shaped resin for improved surface scratch resistance.

A hard coating agent for forming the hard coating layer may preferably be, for example, a coating composition principally composed of at least one silane compound having one or more functional groups such as an epoxy, alkoxy, or vinyl group, and at least one colloidal metal oxide such as silicon oxide, titanium oxide, antimony oxide, tin oxide, tungsten oxide, or aluminum oxide.

The hard coating layer may be formed, for example, by applying the coating composition over the surface of the lens shaped resin by means of a conventional application method, such as a dipping or spin coating method, and curing by heat or UV irradiation. A preferred thickness of the hard coating layer thus formed is usually about 0.5 to 10 μm.

The plastic lens of the present invention, when provided with the hard coating layer, may further has a primer layer formed between the hard coating layer and the surface of the lens shaped resin for improved adhesivity between the resin surface and the hard coating layer, and improved impact resistance of the lens. The present plastic lens may also has an antireflection layer over the hard coating layer.

The antireflection layer may be formed, for example, of a metal oxide or fluoride such as silicon oxide, magnesium fluoride, aluminum oxide, zirconium oxide, titanium oxide, tantalum oxide, or yttrium oxide, by vapor deposition, sputtering, or the like method.

The plastic lens of the present invention may optionally be subjected to a coloring process using disperse dyes or photochromic dyes, for making the lens more fashionable as desired.

The optical material and plastic lens of the present invention have excellent transparency and optical properties without distortion, as well as other properties demanded for lenses including dyeability, heat resistance, and impact resistance.

The present invention will now be explained in detail with reference to Examples and Comparative Examples, which are illustrative only, and are not intended to limit the present invention.

In Examples and Comparative Examples, the following abbreviations refer to the compounds mentioned below. The processes of the evaluation tests conducted in Examples and Comparative Examples are explained below.

Polymerizable Component

DAIP: diallyl isophthalate
DATP: diallyl terephthalate
P-DAIPE: diallyl ester of isophthalic acid-ethylene glycol polyester oligomer
P-DATPB: diallyl ester of terephthalic acid-1,4-butanediol polyester oligomer
P-DAIPP: diallyl ester of isophthalic acid-propylene glycol polyester oligomer
ADC: diethylene glycol bis (allyl carbonate) (manufactured by ASAHI-PENN CHEMICAL CO., LTD.; trade name "CR-39"; mixture of compounds of formula (2) with y=2, containing 89 wt% of the compound with z=1, 7wt% of the compound with z=2, and 4 wt% of the compound with z=3)
DBzF: dibenzyl fumarate
DBzM: dibenzyl maleate
DBzI: dibenzyl itaconate
DEM: diethyl maleate
DBI: di-n-butyl itaconate
BzMA: benzyl methacrylate
mBzM: monobenzyl maleate

Benzotriazole Ultraviolet Absorber

S-MBT: 2-(2'-hydroxy-5'-methylphenyl)-benzotriazole
S-BMBT: 2-(2'-hydroxy-3'-t-butyl-5'-methylphenyl)-5-chlorobenzotriazole
S-OBT: 2-(2'-hydroxy-5'-t-octylphenyl)-benzotriazole

Nonionic Surfactant

NS: polyoxyethylene nonylphenyl ether ("NS-206" manufactured by NOF CORPORATION; HLB=10.9)
HS: polyoxyethylene octylphenyl ether ("HS-208" manufactured by NOF CORPORATION; HLB=12.6)
K: polyoxyethylene stearyl ether ("Nonion S-206" manufactured by NOF CORPORATION; HLB=10.1)
SP: polyoxyethylene sorbitan monooleate ("Nonion OT-221" manufactured by NOF CORPORATION; HLB=15.0)

Cationic Surfactant

TDA: dodecyltrimethylammonium chloride
OAA: octadecylamine acetate
TBA: tetradecyldimethylbenzylammonium chloride

Anionic Surfactant

DBS: sodium dodecylbenzenesulphonate
DOS: sodium dioctyl sulfosuccinate
LN: sodium salt of fatty acid (Nonsal TN-1 manufactured by NOF CORPORATION)

Pigment

| | |
|---|---|
| Ultramarine: | trade name "SM-V10"; manufactured by DAIICHI KASEI KOGYO CO., LTD.; particle size: 0.1 to 1.0 μm) |
| Blue Pigment: | trade name "PB-100"; manufacture by DAIICHI KASEI KOGYO CO., LTD.; particle size: 0.3 to 2.0 μm) |
| Red Pigment: | trade name "Rubicron Red 500RS"; manufactured by TOSOH CORPORATION |

Radical Initiator

| | |
|---|---|
| IPP: | diisopropyl peroxydicarbonate |
| NPP: | di-n-propyl peroxydicarbonate |

<Processes of Evaluation Tests>

(1) Light Beam Transmittance and Yellow Value

The light beam transmittance was measured in accordance with JIS K 7105 with a transmittance photometer manufactured by NIPPON DENSHOKU INDUSTRIES CO., LTD. The yellow value (value of b*) was measured at the same time.

(2) Refractive Index and Abbe's Number

**[0074]** Using a 1 cm × 1.5 cm test piece cut out from a resin plate, the refractive index and Abbe's number were measured at 25 °C with an Abbe refractometer manufactured by ATAGO CO., LTD.

(3) Specific Gravity

The specific gravity (g/$cm^3$) of a test piece was measured in accordance with JIS K 7112 by underwater substitution method.

(4) Impact Resistance

A 16g steel ball was left to fall freely from the height of 127 cm onto a resin plate, and the resulting damage of the sample was observed. ○ indicates that the sample was not damaged, and × indicates that the sample was damaged.

(5) Heat Resistance

Using a 1 cm × 4 cm test piece cut out from a resin plate, the dynamic viscoelasticity was measured with Rheovibron (trade name) manufactured by TOYO BALDWIN CO., LTD. The temperature at which tan δ of the dynamic viscoelasticity became maximum was determined as a glass transition temperature (Tg), and employed as an index of heat resistance.

(6) Dyeability

A resin plate was immersed in a brown dyeing bath at 92 °C for 10 minutes, and the light beam transmittance after the dyeing was measured with a transmittance photometer manufactured by NIPPON DENSHOKU INDUSTRIES CO., LTD.

(7) Detection with Projector

The optical material was observed with a projector for coagulation or sagging of the pigments.

Synthesis Example 1

To a 1 liter four neck flask equipped with a stirrer, a thermometer, a capillary for blowing nitrogen gas, and a condenser, 600 g of DAIP, 80 g of ethylene glycol, and 0.1 g of dibutyl tin oxide were introduced, and heated to 180°C under a nitrogen stream to distill off allyl alcohol for 3 hours. Then the pressure was reduced to 20 mmHg, and allyl alcohol was further distilled off for 3 hours. The obtained reaction liquid was introduced into an excess amount of cyclohexane solvent to extract out the oligomers, from which the solvent was removed to obtain the objective compound P-DAIPE.

$H^1$-NMR of the obtained P-DAIPE was measured. For the allyl groups, a $-C\underline{H}_2-CH=CH_2$ peak was observed at 4.85 ppm, $-CH_2-CH=C\underline{H}_2$ peaks at 5.30 ppm and 5.43 ppm, and a $-CH_2-C\underline{H}=CH_2$ peak at 5.99 ppm. Peaks due to hydrogens of the aromatic ring in isophthalic acid were observed at 7.53 ppm, 8.25 ppm, and 8.80 ppm, and $-OC\underline{H}_2C\underline{H}_2O-$ peaks were observed in 4.0-4.6ppm. The P-DAIPE was dissolved in THF, and the molecular weight was measured by GPC to determine the distribution. It was determined that the obtained P-DAIPE was a mixture of 54 wt% of a compound of formula (1) with x=1, 29 wt% of a compound of formula (1) with x=2, 12 wt% of a compound of formula (1) with x=3, and 5 wt% of a compound of formula (1) with x≥4, with all the $R^1$s being an ethylene group.

Synthesis Example 2

P-DATPB was prepared through synthesis and purification in the same way as in Synthesis Example 1, except that DAIP, ethylene glycol, and dibutyl tin oxide were replaced with 600 g of DATP, 100 g of 1, 4-butanediol, and 0.5 g of tetra-n-butyl titanate, respectively.

$H^1$-NMR of the obtained P-DATPB was measured. For the allyl groups, a $-C\underline{H}_2-CH=CH_2$ peak was observed at 4.92 ppm, $-CH_2-CH=C\underline{H}_2$ peaks at 5.35 ppm and 5.49 ppm, and a $-CH_2-C\underline{H}=CH_2$ peak at 6.01 ppm. Peaks due to hydrogens of the aromatic ring in terephthalic acid were observed in 8.10-8.30 ppm. For the butylene groups, $-C\underline{H}_2-$ peaks were observed in 1.5-2.4 ppm, and $-OC\underline{H}_2CH_2-$ peaks in4.1-4.8ppm. The P-DATPB was dissolved in THF, and the molecular weight was measured by GPC to determine the distribution. It was determined that the obtained P-DATPB was a mixture of 70 wt% of a compound of formula (1) with x=1, 20 wt% of a compound of formula (1) with x=2, and 10 wt% of a compound of formula (1) with x=3, with all the $R^1$s being a butylene group.

Synthesis Example 3

"BA-901" (trade name) manufactured by SHOWA DENKO K.K. was purified by extraction with hexane to obtain P-DAIPP.

$H^1$-NMR of the obtained P-DAIPP was measured. For the allyl groups, a $-C\underline{H}_2-CH=CH_2$ peak was observed at 4.87 ppm, $-CH_2-CH=C\underline{H}_2$ peaks at 5.31 ppm and 5.44 ppm, and a $-CH_2-C\underline{H}=CH_2$ peak at 5.92 ppm. Peaks due to hydrogens of the aromatic ring in isophthalic acid were observed at 7.52 ppm, 8.25 ppm, and 8.81 ppm. For the propylene groups, a $-C\underline{H}_3$ peak was observed at 1.22 ppm, $-OC\underline{H}_2CH(CH_3)-$ peaks in 4.0-4.7 ppm, and $-OCH_2C\underline{H}(CH_3)-$ peaks in 4.9-5.2 ppm. The P-DAIPP was dissolved in THF, and the molecular weight was measured by GPC to determine the distribution. It was determined that the obtained P-DAIPP was a mixture of 49 wt% of a compound of formula (1) with x=1, 29 wt% of a compound of formula (1) with x=2, and 15 wt% of a compound of formula (1) with x=3, and 7 wt% of a compound of formula (1) with x≥4, with all the $R^1$s being a propylene group.

Examples 1-4 and Comparative Examples 1-7

To a pigment composed of 0.9 g of a blue pigment (trade name "PB-100") and 0.1 g of a red pigment (trade name "Rubicron Red 500 RS"), 0.2 g of the surfactant shown in Table 1 and 100 g of ADC were added and mixed to prepare a concentrated dye solution. A portion of the obtained concentrated pigment solution was placed in a 100 ml glass sample bottle, and observed for pigment sedimentation to determine the dispersion stability of the pigment. The evaluation was made immediately after the dispersion, 1 day after the dispersion, and 1 week after the dispersion, and indicated by ○ when no pigment sedimentation was observed on the bottom of the bottle, and × when the sedimentation was observed. The results are shown in Table 1.

Next, the concentrated pigment solution was added to a mixed liquid of 6 g of DAIP, 8 g of P-DAIPP, and 6 g of ADC as polymerizable components, and 2000 ppm of S-BMBT as an ultraviolet absorber, and stirred at room temperature for 30 minutes to prepare an optical material composition. Here, the amount of the concentrated pigment solution added was decided such that the concentration of the surfactant in the resulting composition was 10 ppm. The obtained composition was filtered through a nylon filter (pore size : 5 μm). The stability of the composition was evaluated by means of the rate of change in the pigment concentration calculated from the visible light beam transmittance (460 nm) before and after the filtration. The composition was also stored in a glass bottle at 40 °C for 30 days,

and the dispersion stability of the pigment was evaluated in the same way as for the concentrated pigment solution. The results are shown in Table 1.

Further, 20 g of the composition was mixed with 0.64 g of IPP as a radical initiator, and introduced into a mold composed of two glass disks of 7cm in diameter and an ethylene-propylene rubber gasket of 2 mm thick. The mold was heated from 30 °C to 100 °C over 18 hours in a hot air thermostatic chamber provided with a programmed temperature, and kept at 100 °C for 2 hours. Then the mold was cooled down to 40 °C over 2 hours to cure the composition in the mold. The cured product was demolded to give a resin lump in the form of a disk. The obtained resin lump was then annealed at 100 °C for 2 hours, to thereby obtain an optical material in the form of a disk. The obtained optical material was evaluated for light beam transmittance and yellow value, and subjected to detection with the projector. The results are shown in Table 1.

Table 1

| | | Examples | | | | Comparative Examples | | | | | | |
|---|---|---|---|---|---|---|---|---|---|---|---|---|
| | | 1 | 2 | 3 | 4 | 1 | 2 | 3 | 4 | 5 | 6 | 7 |
| Nonionic Surfactant | | NS | HS | SP | K | - | - | - | - | - | - | - |
| Anionic Surfactant | | - | - | - | - | DBS | DOS | LN | - | - | - | - |
| Cationic Surfactant | | - | - | - | - | - | - | - | TDA | OAA | TBA | - |
| Stability of Concentrated Pigment Solution | Immediately After Dispersion | ○ | ○ | ○ | ○ | × | × | × | × | ○ | ○ | × |
| | 1 Day After Dispersion | ○ | ○ | ○ | ○ | × | × | × | × | × | ○ | × |
| | 7 Days After Dispersion | ○ | ○ | ○ | × | × | × | × | × | × | × | × |
| Rate of Change in Pigment Concentration in Composition (%) | | 98 | 94 | 89 | 81 | 23 | 20 | 15 | 48 | 53 | 85 | 57 |
| Stability of Composition after 30 Days | | ○ | ○ | × | × | × | × | × | × | × | × | × |
| Light Beam Transmittance (%) | | 89 | 89 | 89 | 90 | 89 | 89 | 88 | 88 | 86 | 87 | 89 |
| Yellow Value (b* value) | | 0.2 | 0.3 | 0.4 | 0.5 | 1.7 | 1.6 | 1.2 | 3.5 | 2.6 | 4.3 | 0.9 |
| Detection with Projector | | NO | NO | NO | YES | YES | YES | YES | YES | YES | NO | YES |

The results shown in Table 1 show that Examples with nonionic surfactants gave excellent results both in the

stability of the concentrated pigment solution and the optical properties of the resulting resin, and in particular use of the nonionic surfactants NS and HS having an HLB in the range of 8 to 17 resulted in excellent stability of the compositions of the present invention. On the other hand, Comparative Examples with anionic surfactants had problems in solubility and pigment dispersibility, and Comparative Examples with cationic surfactants had problems of remarkable yellowing due to the radical initiator.

Examples 5 to 12

Polymerizable components other than ADC, a benzotriazole ultraviolet absorber, and a concentrated pigment solution obtained by mixing a pigment and a nonionic surfactant in ADC, all shown in Table 2, were mixed to have the composition for each Example and stirred.

The concentrated pigment solution was prepared by adding 1 g of ultramarine (trade name "SM-V10") as the pigment, 0.18 g of NS or 0.2 g of HS as the nonionic surfactant to 100 g of ADC, and mixed in a ball mill at room temperature for 30 minutes.

After the components were mixed and stirred, the resulting mixture was passed through a nylon filter (pore size: 5 μm) for removing impurities, and the objective optical material composition was obtained.

The stability of the obtained composition was evaluated by means of the rate of change in the pigment concentration calculated from the visible light beam transmittance (460 nm) before and after the filtration. The results are shown in Table 2. Incidentally, the pigment concentrations of the optical material compositions prepared in Examples 5 to 12 stayed stably even after the compositions were left to stand at 40 °C for 30 days.

Next, 20 g of the composition was mixed with IPP or NPP as a radical initiator in the amount shown in Table 1, and introduced into a mold composed of two glass disks of 7cm in diameter and an ethylene-propylene rubber gasket of 2 mm thick. The mold was heated from 30 °C to 100 °C over 18 hours in a hot air thermostatic chamber provided with a programmed temperature, and kept at 100 °C for 2 hours. Then the mold was cooled down to 40 °C over 2 hours to cure the composition in the mold. The cured product was demolded to give a resin lump in the form of a disk. The obtained resin lump was then annealed at 100 °C for 2 hours for curing, to thereby obtain an optical material in the form of a resin plate. The obtained optical material was evaluated for light beam transmittance, yellow value, refractive index, Abbe's number, specific gravity, impact resistance, heat resistance, and dyeability. The results are shown in Table 2. Incidentally, the optical materials in the form of a resin plate cured in Examples 5 to 12 were not observed to be yellowed even after they were left to stand for 2 years.

Table 2

| | | Examples 5 | 6 | 7 | 8 | 9 | 10 | 11 | 12 |
|---|---|---|---|---|---|---|---|---|---|
| Polymerizable Component (g) | DAIP | 6 | 6 | 6 | 4 | 4 | - | - | - |
| | DATP | - | - | - | - | - | 6 | 6 | 4 |
| | P-DAIPE | 8 | - | - | 12 | - | - | - | - |
| | P-DAIPP | - | 8 | 8 | - | 12 | 8 | - | - |
| | P-DATPB | - | - | - | - | - | - | 8 | 12 |
| | ADC | 6 | 6 | 6 | 4 | 4 | 6 | 6 | 4 |
| Ultraviolet Absorber (ppm) | S-MBT | 2000 | - | - | - | - | 2000 | - | - |
| | S-BMBT | - | 2000 | - | - | - | - | 2000 | - |
| | S-OBT | - | - | 2000 | 2000 | 2000 | - | - | 2000 |
| Blue Pigment (Ultramarine) ppm | | 40 | 40 | 40 | 40 | 40 | 40 | 40 | 40 |
| Nonionic Surfactant (ppm) | NS | 7 | 7 | 7 | - | - | 7 | 7 | - |
| | HS | - | - | - | 8 | 8 | - | - | 8 |
| Radical Initiator (g) | IPP | 0.64 | 0.64 | 0.64 | - | - | 0.64 | 0.64 | 0.66 |
| | NPP | - | - | - | 0.66 | 0.66 | - | - | - |
| Rate of Change in Pigment Concentration in Composition (%) | | 95 | 96 | 98 | 92 | 93 | 97 | 96 | 94 |
| Light Beam Transmittance (%) | | 89 | 88 | 89 | 88 | 88 | 89 | 89 | 88 |
| Yellow Value (b* value) | | 0.2 | 0.3 | 0.2 | 0.4 | 0.3 | 0.2 | 0.3 | 0.3 |
| Refractive Index (%) | | 1.549 | 1.550 | 1.548 | 1.557 | 1.558 | 1.550 | 1.549 | 1.561 |
| Abbe's Number | | 38 | 38 | 37 | 35 | 35 | 38 | 37 | 35 |
| Specific Gravity (g/cm³) | | 1.270 | 1.265 | 1.266 | 1.269 | 1.271 | 1.268 | 1.267 | 1.275 |
| Impact Resistance | | ○ | ○ | ○ | ○ | ○ | ○ | ○ | ○ |
| Heat Resistance (℃) | | 126 | 126 | 125 | 128 | 127 | 127 | 127 | 128 |
| Dyeability (%) | | 27 | 28 | 28 | 29 | 27 | 26 | 25 | 28 |

Examples 13 to 20

An optical material composition was prepared in the same way as in Examples 5 to 12, except that the concentrated pigment solution was prepared from a mixture of 0.9 g of a blue pigment "PB-100" (trade name) and 0.1 g of a red pigment "Rubicron Red 500 RS" (trade name) as the pigment, and. components of the composition shown in Table 3 were used. The resulting composition was cured to prepare an optical material resin plate and a lens, and the evaluation tests were conducted thereon. The results are shown in Table 3.

Incidentally, the pigment concentrations of the optical material compositions prepared in Examples 13 to 20

stayed stably even after the compositions were left to stand at 40 °C for 30 days. The resin plates obtained by curing the optical material compositions were not observed to be yellowed even after they were left to stand for 2 years.

Table 3

| | | Examples | | | | | | | |
|---|---|---|---|---|---|---|---|---|---|
| | | 13 | 14 | 15 | 16 | 17 | 18 | 19 | 20 |
| Polymerizable Component (g) | DAIP | 6 | 6 | - | 6 | 6 | - | 6 | 6 |
| | DATP | - | - | 6 | - | - | 6 | - | - |
| | P-DAIPE | 8 | - | - | 8 | - | - | 8 | - |
| | P-DAIPP | - | 8 | 8 | - | 8 | 8 | - | 8 |
| | ADC | 4 | 4 | 4 | 5 | 5.4 | 4 | 5 | 5.4 |
| | DBzF | 2 | 2 | - | - | - | - | - | - |
| | DBzM | - | - | 2 | 1 | 0.6 | - | - | - |
| | DBzI | - | - | - | - | - | 2 | 1 | 0.6 |
| Ultraviolet Absorber (ppm) | S-MBT | 2000 | 2000 | - | - | - | - | - | - |
| | S-BMBT | - | - | - | - | - | 2000 | 2000 | 2000 |
| | S-OBT | - | - | 2000 | 2000 | 2000 | - | - | - |
| Pigment: PB-100 and Rubicron Red (ppm) | | 10 | 10 | 10 | 10 | 10 | 10 | 10 | 10 |
| Nonionic Surfactant (ppm) | NS | 7 | 7 | - | 7 | 7 | - | 7 | 7 |
| | HS | - | - | 8 | - | - | 8 | - | - |
| Radical Initiator (g) | IPP | 0.64 | 0.64 | 0.64 | - | - | 0.64 | 0.64 | 0.66 |
| | NPP | - | - | - | 0.66 | 0.66 | - | - | - |
| Rate of Change in Pigment Concentration in Composition (%) | | 98 | 95 | 92 | 93 | 96 | 91 | 99 | 95 |
| Light Beam Transmittance (%) | | 88 | 88 | 89 | 88 | 88 | 89 | 88 | 88 |
| Yellow Value (b* value) | | 0.3 | 0.2 | 0.2 | 0.3 | 0.3 | 0.3 | 0.4 | 0.3 |
| Refractive Index (%) | | 1.558 | 1.556 | 1.560 | 1.553 | 1.552 | 1.561 | 1.550 | 1.561 |
| Abbe's Number | | 37 | 38 | 38 | 37 | 36 | 38 | 38 | 38 |
| Specific Gravity (g/cm$^3$) | | 1.266 | 1.258 | 1.264 | 1.271 | 1.270 | 1.262 | 1.267 | 1.271 |
| Impact Resistance | | ○ | ○ | ○ | ○ | ○ | ○ | ○ | ○ |
| Heat Resistance (℃) | | 124 | 124 | 125 | 126 | 125 | 127 | 128 | 128 |
| Dyeability (%) | | 26 | 28 | 27 | 27 | 26 | 27 | 27 | 28 |

Examples 21 to 25

An optical material composition was prepared in the same way as in Examples 12 to 20, except that components of the composition shown in Table 4 were used. The resulting composition was cured to prepare an optical material resin plate and a lens, and the evaluation tests were conducted thereon. The results are shown in Table 4.

Incidentally, the pigment concentrations of the optical material compositions prepared in Examples 21 to 25 stayed stably even after the compositions were left to stand at 40 °C for 30 days. The resin plates obtained by curing the optical material compositions were not observed to be yellowed even after they were left to stand for 2 years.

Table 4

| | | Examples | | | | |
|---|---|---|---|---|---|---|
| | | 21 | 22 | 23 | 24 | 25 |
| Polymerizable Component (g) | DAIP | 6 | 6 | 6 | 6 | 6 |
| | P-DAIPE | 8 | - | - | 8 | - |
| | P-DAIPP | - | 8.5 | 8 | - | 8 |
| | ADC | 4 | 4 | 4 | 5 | 5 |
| | DEM | 1 | - | - | - | - |
| | DEM | 1 | - | - | - | - |
| | DBI | - | 1 | - | - | - |
| | BzMA | - | - | 2 | 1 | - |
| | mBzM | - | - | - | - | 1 |
| Ultraviolet Absorber (ppm) | S-MBT | 2000 | 2000 | - | - | - |
| | S-OBT | - | - | 2000 | 2000 | 2000 |
| Pigment: PB-100 and Rubicron Red (ppm) | | 10 | 10 | 10 | 10 | 10 |
| Nonionic Surfactant NS (ppm) | | 7 | 7 | 7 | 7 | 7 |
| Radical Initiator (g) | IPP | 0.64 | 0.64 | - | - | 0.64 |
| | NPP | - | - | 0.66 | 0.66 | - |
| Rate of Change in Pigment Concentration in Composition (%) | | 97 | 96 | 95 | 93 | 96 |
| Light Beam Transmittance (%) | | 89 | 88 | 89 | 88 | 88 |
| Yellow Value (b* value) | | 0.2 | 0.3 | 0.3 | 0.2 | 0.3 |
| Refractive Index (%) | | 1.552 | 1.551 | 1.558 | 1.552 | 1.551 |
| Abbe's Number | | 38 | 38 | 37 | 37 | 37 |
| Specific Gravity (g/cm$^3$) | | 1.269 1.269 | 1.270 1.270 | 1.268 1.268 | 1.265 1.265 | 1.273 1.273 |
| Impact Resistance | | ○ | ○ | ○ | ○ | ○ |
| Heat Resistance (°C) | | 120 | 122 | 128 | 129 | 126 |
| Dyeability (%) | | 26 | 27 | 26 | 25 | 22 |

Comparative Examples 8 to 15

The evaluation tests were conducted in the same way as in Examples 5 to 12 on commercially available 2mm plates of PADC, PMMA, and PC, and a urethane resin lens (manufactured by MITSUI CHEMICALS, LTD., trade name "MR-6") as Comparative Examples 8 to 11. The results are shown in Table 5.

As Comparative Examples 12 to 15, optical material compositions were prepared in the same way as in Examples 5 to 12, except that the composition of Example 2 or 10 was used with the pigment and the surfactant, or only the pigment, being omitted. Each of the resulting compositions was cured to prepare an optical material resin plate and a lens, and the evaluation tests were conducted thereon. The results are shown in Table 5.

Table 5

| | | Comparative Examples | | | | | | | |
|---|---|---|---|---|---|---|---|---|---|
| | | 8 | 9 | 10 | 11 | 12 | 13 | 14 | 15 |
| Polymerizable Component (g) | DAIP | - | - | - | - | 6 | 6 | 6 | 6 |
| | P-DAIPP | - | - | - | - | 8 | 8 | 8 | 8 |
| | ADC | - | - | - | - | 6 | 4 | 6 | 4 |
| | DBzF | - | - | - | - | - | 2 | - | 2 |
| Ultraviolet Absorber (ppm) | S-MBT | - | - | - | - | - | 2000 | - | 2000 |
| | S-BMBT | - | - | - | - | 2000 | | 2000 | |
| Blue Pigment (ppm) | Ultramarine | - | - | - | - | - | - | 40 | - |
| | PB-100, Rubicron Red | - | - | - | - | - | - | - | 10 |
| Material | | PMMA | PC | Urethane Resin | ADC | - | - | - | - |
| Radical Initiator IPP (g) | | - | - | - | - | 0.64 | 0.64 | 0.64 | 0.64 |
| Light Beam Transmittance (%) | | 92 | 89 | 91 | 92 | 89 | 88 | 88 | 89 |
| Yellow Value (b* value) | | - | - | - | - | 1.9 | 1.8 | 0.9 | 1.0 |
| Refractive Index (%) | | 1.492 | 1.583 | 1.593 | 1.498 | 1.549 | 1.553 | 1.549 | 1.552 |
| Abbe's Number | | 57 | 29 | 33 | 56 | 38 | 37 | 38 | 38 |
| Specific Gravity (g/cm$^3$) | | 1.19 | 1.26 | 1.33 | 1.32 | 1.264 | 1.262 | 1.265 | 1.260 |
| Impact Resistance | | ○ | ○ | ○ | ○ | ○ | ○ | ○ | ○ |
| Heat Resistance (℃) | | 110 | 138 | 86 | 91 | 125 | 124 | 127 | 126 |
| Dyeability (%) | | 60 | 82 | 35 | 30 | 27 | 27 | 28 | 26 |

From the results shown above, it is understood that the optical material compositions of the present invention may readily be molded and cured into optical materials through curing radical polymerization. The resulting optical materials have excellent transparency, colorlessness, and weatherability, and give plastic lenses having an excellent refractive index, Abbe's number, specific gravity, heat resistance, impact resistance, and dyeability.

## Claims

1. An optical material composition comprising a polymerizable component containing a diallyl compound, a benzotriazole ultraviolet absorber, a blue pigment, and a nonionic surfactant.

2. The optical material composition of claim 1, wherein said diallyl compound is selected from the group consisting of a diallyl phthalate, a diallyl ester compound represented by formula (1), a diallyl carbonate compound represented by formula (2), and mixtures thereof:

$$CH_2{=}CHCH_2O\overset{O}{\overset{\|}{C}}{-}Ph{-}\overset{O}{\overset{\|}{C}}O{-}(R^1O\overset{O}{\overset{\|}{C}}{-}Ph{-}\overset{O}{\overset{\|}{C}}O)_x{-}CH_2CH{=}CH_2 \quad ...(1)$$

wherein $R^1$ stands for an alkylene group having 1 to 4 carbon atoms, Ph stands for a phenylene group, and x denotes an integer of 1 to 20;

$$CH_2{=}CHCH_2O\overset{O}{\overset{\|}{C}}O{-}((CH_2CH_2O)_y\overset{O}{\overset{\|}{C}}O)_z{-}CH_2CH{=}CH_2 \quad ...(2)$$

wherein y denotes an integer of 2 to 5, and z denotes an integer of 1 to 4.

3. The optical material composition of claim 1, wherein said polymerizable component further comprises an unsaturated carboxylate.

4. The optical material composition of claim 3, wherein said unsaturated carboxylate is a compound represented by formula (3):

$$R^2R^3C{=}CR^4{-}CO_2R^5 \qquad (3)$$

wherein $R^2$, $R^3$, and $R^4$ are same or different groups and each stands for a hydrogen atom, a methyl group, $-CO_2R^6$ or $-CH_2CO_2R^6$, and $R^5$ and $R^6$ are same or different groups and each stands for an organic group having 1 to 12 carbon atoms or a hydrogen atom.

5. The optical material composition of claim 1, wherein said nonionic surfactant is selected from the group consisting of alkyl ether, alkyl phenol, alkyl ester, sorbitan ester, and sorbitan ester ether nonionic surfactants, and mixtures thereof.

6. The optical material composition of claim 1, wherein said nonionic surfactant has an HLB of 8 to 17.

7. The optical material composition of claim 1, wherein said nonionic surfactant has an HLB of 10.5 to 14.

8. The optical material composition of claim 1, wherein a content of said benzotriazole ultraviolet absorber is 100 to 10000ppm, a content of said blue pigment is 10 to 200 ppm, and a content of said nonionic surfactant is 1 to 200

ppm.

9. An optical material obtained by curing an optical material composition of claim 1, and having a refractive index of not lower than 1.53, and an Abbe's number of not smaller than 33.

10. A plastic lens comprising a lens shaped resin obtained by processing an optical material of claim 9.

11. The plastic lens of claim 10 further comprising a hard coating layer over the lens shaped resin.

# INTERNATIONAL SEARCH REPORT

International application No.
PCT/JP00/07122

A. CLASSIFICATION OF SUBJECT MATTER
Int.Cl7 G02B1/04, C08L57/00, C08K5/3472, C08F290/04, C08F18/16

According to International Patent Classification (IPC) or to both national classification and IPC

B. FIELDS SEARCHED

Minimum documentation searched (classification system followed by classification symbols)
Int.Cl7 G02B1/04, C08L57/00, C08K5/3472, C08F290/04, C08F18/16

Documentation searched other than minimum documentation to the extent that such documents are included in the fields searched
Jitsuyo Shinan Koho 1926-1996 Toroku Jitsuyo Shinan Koho 1994-2000
Kokai Jitsuyo Shinan Koho 1971-2000 Jitsuyo Shinan Toroku Koho 1996-2000

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | EP 540043 A1 (NOF Corporation), 05 May, 1993 (05.05.93), Full text & JP 5-125120 A & US 5340893 A & DE 69210754 E & SG 44519 A1 | 1-11 |
| Y | EP 540003 A1 (NOF Corporation), 21 May, 1993 (21.05.93), Full text & JP 5-125121 A & US 5336743 A & DE 69210539 E & SG 42956 A1 & KR 9613122 B1 | 1-11 |
| A | JP 11-202101 A (Hoya Corporation), 30 July, 1999 (30.07.99), Full text (Family: none) | 1-11 |
| A | JP 2000-219755 A (Mitsui Chemicals, Ltd.), 08 August, 2000 (08.08.00), Full text & WO 00/31168 A1 | 1-11 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 January, 2001 (09.01.01) | 16 January, 2001 (16.01.01) |
| Name and mailing address of the ISA/ Japanese Patent Office | Authorized officer |
| Facsimile No. | Telephone No. |

Form PCT/ISA/210 (second sheet) (July 1992)

## INTERNATIONAL SEARCH REPORT

International application No.
PCT/JP00/07122

C (Continuation). DOCUMENTS CONSIDERED TO BE RELEVANT

| Category* | Citation of document, with indication, where appropriate, of the relevant passages | Relevant to claim No. |
|---|---|---|
| A | JP 5-195446 A (Mitsubishi Rayon Co., Ltd.), 03 August, 1993 (03.08.93), Full text (Family: none) | 1-11 |
| A | JP 5-195445 A (Mitsubishi Rayon Co., Ltd.), 03 August, 1993 (03.08.93), Full text (Family: none) | 1-11 |
| A | JP 11-84101 A (Nikon Corporation), 26 March, 1999 (26.03.99), Full text (Family: none) | 1-11 |
| A | JP 9-48895 A (Olympus Optical Company, Limited), 18 February, 1997 (18.02.97), Full text (Family: none) | 1-11 |

Form PCT/ISA/210 (continuation of second sheet) (July 1992)